# EUROPEAN PATENT SPECIFICATION

(11) **EP 0 663 371 B1**
(45) Date of publication and mention of the grant of the patent: **31.03.1999**
(21) Application number: 95300253.2
(22) Date of filing: 17.01.1995
(51) Int. Cl.: C01B 31/22, F25J 1/02

(54) **Production of solid carbon dioxide**
Herstellung von festem Kohlendioxid
Production de dioxyde de carbone solide

(30) Priority: 18.01.1994 GB 9400838
(43) Date of publication of application: 19.07.1995
(73) Proprietor: MESSER UK LIMITED, Reigate, Surrey RH2 9QE (GB)
(72) Inventor: Cumner, Clive Stewart, Guildford, Surrey GU2 5LD (GB)
(74) Representative: Rackham, Stephen Neil

(56) References cited:
- FR-A- 2 654 717
- US-A- 3 901 044
- PATENT ABSTRACTS OF JAPAN vol. 5, no. 58 (C-051) 21 April 1981 & JP-A-56 009 208 (NIPPON SANSO K.K.) 30 January 1981

## Description

Solid carbon dioxide is conventionally obtained by discharging liquid carbon dioxide through an orifice to produce a mixture of carbon dioxide snow and gaseous carbon dioxide. The gaseous carbon dioxide is separated from the carbon dioxide snow and the carbon dioxide snow is subsequently compacted by rams or rotating rollers which force the snow through a die to compress it into solid pellets or slices. Blocks of carbon dioxide are produced by compressing snow within an enclosed chamber.

Typically, only about forty percent of the liquid carbon dioxide is converted to carbon dioxide snow and so to avoid wasting carbon dioxide the gaseous carbon dioxide is recovered and re-liquefied. This recovery cycle is relatively expensive.

A process and an apparatus for producing solid carbon dioxide by directly refrigerating liquid carbon dioxide in a die is known from US-A-3901044.

According to a first aspect of the present invention, a method of producing solid carbon dioxide comprising the steps of:
providing a supply of refrigerant which is arranged to flow along a path at least part of which is adjacent to a die so that the refrigerant is in thermal contact with the die;
providing a supply of liquid carbon dioxide to an inlet at one end of the die and allowing the carbon dioxide to flow into the die;
is characterised in that the solid carbon dioxide is extruded from an outlet at the other end of the die under the pressure exerted by liquid carbon dioxide at the die inlet; and in that the rate of flow of liquid carbon dioxide and the rate at which solid carbon dioxide is extruded from the die outlet is controlled so that the rate equals the rate at which liquid carbon dioxide within the die solidifies, thereby maintaining a continuous flow of solid carbon dioxide through the outlet.

According to a second aspect of the present invention, an apparatus for producing solid carbon dioxide comprising a die having an inlet and an outlet, means to connect the die inlet to a supply of liquid carbon dioxide under pressure, wherein the die is surrounded by means capable of containing a continuous flow of refrigerant so that, in use, the refrigerant is in thermal contact with the die to cool the liquid carbon dioxide so that it solidifies in the die;
is characterised in that the solid carbon dioxide is extruded from the outlet as a result of the pressure of the liquid carbon dioxide and in that the apparatus also includes a retarder mechanism to control the rate of extrusion of solid carbon dioxide and means to control the rate of flow of liquid carbon dioxide so that the rate at which solid carbon dioxide is continuously extruded from the carbon dioxide passage outlet equals the rate at which liquid carbon dioxide within the carbon dioxide passage solidifies.

Preferably, the refrigerant used in both the first and second aspects of the present invention is liquid nitrogen.

Preferably, the method further comprises the steps of heating the flow of nitrogen after it has passed the die to vaporise all of the nitrogen and subsequently dispensing the nitrogen into pressure vessels.

Preferably, the apparatus further comprises a heating means which heats the flow of nitrogen after it has passed the die to ensure all the nitrogen is in a gaseous state and an outlet valve means capable of dispensing the nitrogen into pressure vessels.

The die may be surrounded by a coiled length of tubing which contains the flow of liquid nitrogen. However, preferably, the die is contained within a housing which has a nitrogen inlet and a nitrogen outlet so that the housing is filled with liquid nitrogen which is continually flowing through the housing at a controlled rate. This is similar to a shell and tube type heat exchanger.

Preferably, the die comprises a number of carbon dioxide passages each of which is immersed in liquid nitrogen to maximise thermal contact and transfer heat energy from the liquid carbon dioxide to the liquid nitrogen as the carbon dioxide flows along the length of the die. Accordingly, as the carbon dioxide flows through the die it is cooled and consequently freezes.

Preferably, the outlet of the or each carbon dioxide passage is provided with means to close the outlet to prevent the flow of carbon dioxide from the die. This mechanism allows an initial plug of solid carbon dioxide to develop as the liquid carbon dioxide is cooled by the liquid nitrogen so that when the carbon dioxide passage outlet is opened solid carbon dioxide flows steadily out from the carbon dioxide passage outlet.

The retarder mechanism may be in the form of a rotating plate adjacent to the die outlet which is provided with a number of slots so that as the plate is rotated the outlet of the or each carbon dioxide passage is periodically opened and closed allowing lengths of solid carbon dioxide to be extruded and subsequently broken off. However, it is preferred that the retarder mechanism comprises a blocking plate which is arranged to close the outlet of the or each carbon dioxide passage in a first position and subsequently may be withdrawn to a second position a short distance from the outlet to allow a length of carbon dioxide to be extruded from the or each carbon dioxide passage. The blocking plate is then arranged to apply a torsional moment to break off the extruded solid carbon dioxide adjacent to the outlet of the or each carbon dioxide passage. Thereafter, solid carbon dioxide continues to be extruded until it meets the blocking plate whereupon a further torsional moment is applied to break off a further length or lengths of solid carbon dioxide.

In the preferred embodiment of the present invention solid carbon dioxide is formed by directly refrigerating liquid carbon dioxide using liquid nitrogen as refrigerant. Accordingly, there is no longer an intermediate stage of producing carbon dioxide snow and gas which requires separation and compaction. The continuous removal of heat from the liquid carbon dioxide produces a more crystalline and hence denser solid without any wastage of carbon dioxide and without the requirement to recover and reliquefy any gaseous carbon dioxide. The cooling process will produce gaseous nitrogen following the heat exchange from the liquid carbon dioxide and in a simplest configuration the vaporised nitrogen can be discharged to atmosphere. Further, in an integrated production plant the vaporised nitrogen can readily be dispensed into cylinders for sale.

In existing industrial gases filling plants, liquid nitrogen is pumped from a vacuum insulated storage vessel through an atmospheric vaporiser at high pressure and is filled into cylinders via distribution manifolds and control valves. In an integrated system, the liquid nitrogen is used to cool the liquid carbon dioxide to produce solid carbon dioxide and subsequently the flow of nitrogen is directed through an atmospheric vaporiser before dispensing into cylinders. This system enables solid carbon dioxide to be produced extremely cheaply as virtually no additional energy is required to drive the system. The apparatus for producing solid carbon dioxide is merely fitted between an existing liquid nitrogen supply and atmospheric vaporiser in a conventional industrial gas plant.

An example of the present invention will now be described in detail with reference to the accompanying drawings in which:
Figure 1 illustrates an integrated system for the production of solid carbon dioxide;
Figure 2 shows a cross section of one example of a heat exchanger; and,
Figures 3A and 3B show a simplified cross section of one example of a retarder mechanism.

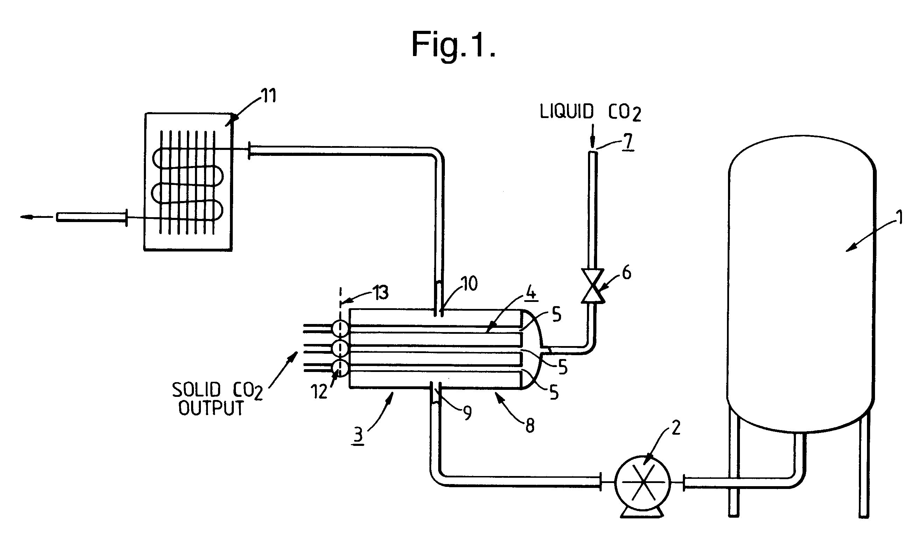

Figure 1 shows a liquid nitrogen storage vessel 1 connected via a pump 2 to a heat exchange device 3. The heat exchange device 3 comprises a die 4 comprising a number of carbon dioxide passages 5 which at one end are connected via a valve 6 to a supply of liquid carbon dioxide 7. The die 4 is sealed within a housing 8 which has a nitrogen inlet 9 and a nitrogen outlet 10.

Nitrogen from the nitrogen storage vessel 1 is pumped into the heat exchanger 3 via inlet 9 and flows out of the heat exchanger 3 via outlet 10 to an ambient vaporiser 11. It is possible to feed nitrogen to the heat exchanger 3 at the storage pressure of the nitrogen tank, i.e. without the aid of a pump, to reduce the design pressure requirements of the heat exchanger 3. Liquid nitrogen fills the volume of the housing 8 so that the outer surface of each of the carbon dioxide passages 5 is totally immersed in liquid nitrogen. Each carbon dioxide passage 5 includes an outlet 12 which is provided with a retarder mechanism for opening and closing the passage.

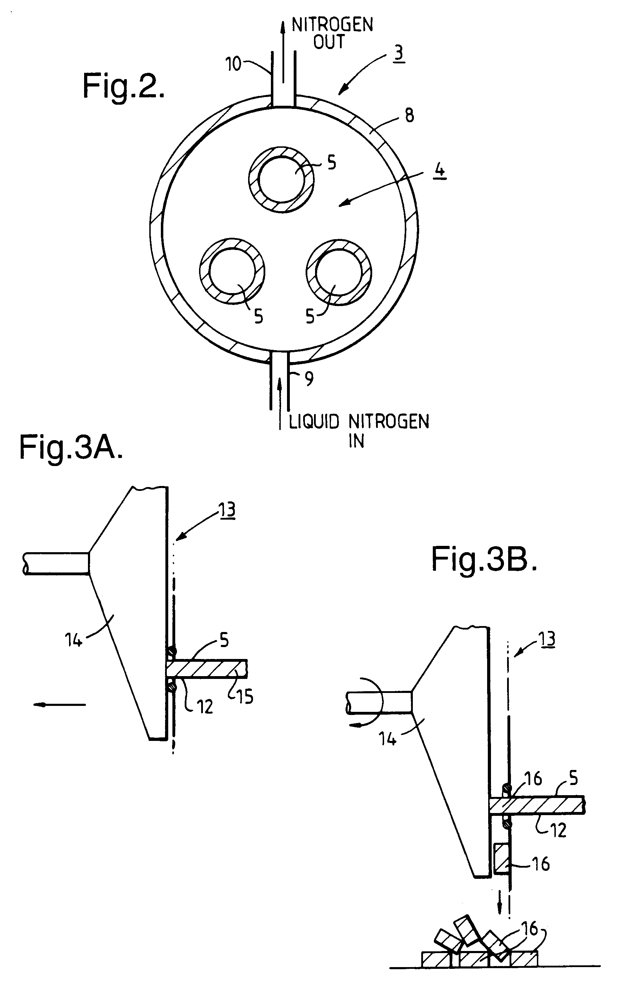

Figure 2 shows a cross section of the heat exchanger 3 illustrating how liquid nitrogen is arranged to surround each of the carbon dioxide passages 5 to transfer heat from the liquid carbon dioxide. The housing 8 is insulated to prevent heat from the surrounding atmosphere boiling the liquid nitrogen. The outlet 10 is situated above the inlet 9 to prevent a pocket of nitrogen gas developing.

In use, once a flow of liquid nitrogen is established through the heat exchanger 3 and the temperature of the housing 8 and die 4 has stabilised, a supply of liquid carbon dioxide is introduced into the die 4 via valve 6 and liquid carbon dioxide flows into each of the carbon dioxide passages 5. With the retarder 13 in a closed position, the flow of liquid carbon dioxide through the outlets 12 is prevented. Subsequently, there is a heat transfer between the liquid carbon dioxide and the liquid nitrogen to cool and solidify the liquid carbon dioxide within the passages 5. Once a plug of solid carbon dioxide has been established in each passage 5, the outlets 12 are opened and solid carbon dioxide is extruded under the influence of the pressure of the liquid carbon dioxide at the inlets to each passage 5. Thereafter, a continuous flow of solid carbon dioxide from the outlet 12 will be established and will continue for as long as liquid nitrogen is being pumped through the heat exchanger 3.

Figures 3A and 3B show examples of a retarder mechanism 13. The retarder 13 comprises a blocking plate 14 which is arranged in a first position, shown in Figure 3A, to close the outlet 12 of a carbon dioxide passage 5 to allow a plug of solid carbon dioxide 15 to develop. Subsequently, the blocking plate 14 is withdrawn a short distance, shown in Figure 3B, from the outlet 12 to allow a length of solid carbon dioxide 16 to be extruded. The carbon dioxide shrinks as it freezes within the carbon dioxide passage 5 and so solid carbon dioxide will not jam within the carbon dioxide passage 5. The blocking plate 14 is arranged to be capable of rotating slightly about an axis to exert a torsional moment on the length of solid carbon dioxide 16 so that the solid carbon dioxide 16 breaks off adjacent to the outlet 12. Solid carbon dioxide within the carbon dioxide passage 5 then moves forward again, restricted only by frictional force in the carbon dioxide passage 5, until it contacts the blocking plate 14 and a further length is again broken off by the application of a torsional moment.

By adjusting the rate of flow of carbon dioxide relative to the flow of liquid nitrogen, it is possible to cool the solid carbon dioxide to below minus 78.4°C at atmospheric conditions, which is the normal temperature of dry ice at atmospheric pressure. It is therefore possible to prevent any sublimation losses taking place from the product until sufficient heat has been absorbed through the walls of an insulated storage container (not shown) to raise the temperature of the solid carbon dioxide to minus 78.4°C.

Most of the liquid nitrogen which passes through the housing 8 will vaporise due to the transfer of heat from the carbon dioxide. However, the outlet 10 is connected to the vaporiser 11 which ensures that all the nitrogen is in a gaseous state. Thereafter, the gaseous nitrogen is carried away in pipes to be dispensed into gas cylinders for sale. If necessary, a conpressor (not shown) may be provided to increase the pressure of the gaseous nitrogen prior to dispensing into gas cylinders.

When the storage vessel 1 has been emptied, the pump 2 is stopped and the valve 6 is closed. Any carbon dioxide remaining within the heat exchange 3 will subsequently vaporise and be exhausted to atmosphere.

When solid carbon dioxide is not being produced, liquid nitrogen may still be pumped through the heat exchanger 3 and vaporiser 11 for dispensing into gas cylinders. Alternatively, a by-pass may be provided (not shown) to feed the liquid nitrogen directly to the vaporiser 11.

## Claims

1. An apparatus for producing solid carbon dioxide comprising a die (4) having an inlet and an outlet (12), means (6) to connect the die inlet to a supply of liquid carbon dioxide (7) under pressure, wherein the die (4) is surrounded by means (8 to 10) capable of containing a continuous flow of refrigerant so that, in use, the refrigerant is in thermal contact with the die (4) to cool the liquid carbon dioxide so that it solidifies in the die (4); characterised in that the solid carbon dioxide is extruded from the outlet (12) as a result of the pressure of the liquid carbon dioxide and in that the apparatus also includes a retarder mechanism (13) to control the rate of extrusion of solid carbon dioxide and means to control the rate of flow of liquid carbon dioxide so that the rate at which solid carbon dioxide (16) is continuously extruded from the carbon dioxide passage outlet (12) equals the rate at which liquid carbon dioxide within the carbon dioxide passage (5) solidifies.

2. An apparatus according to claim 1, in which the die (4) is contained within a housing (8) which has a refrigerant inlet (9) and a refrigerant outlet (10) so that the housing (8) may be filled with refrigerant which may flow continually through the housing (8).

3. An apparatus according to claim 1 or 2, in which the die (4) comprises a number of carbon dioxide passages (5) each of which is immersed in refrigerant to maximise thermal contact and transfer heat energy from the liquid carbon dioxide to the refrigerant as the carbon dioxide flows along the length of the die (4).

4. An apparatus according to any preceding claim, in which the refrigerant is liquid nitrogen.

5. An apparatus according to claim 4, further comprising a heating means (11) which heats the flow of nitrogen after it has passed the die (4) to ensure all the nitrogen is in a gaseous state and an outlet valve means capable of dispensing the nitrogen into pressure vessels.

6. An apparatus according to any one of claims 3 to 5, in which the outlet (12) of the or each carbon dioxide passage (5) is provided with means to close the outlet to prevent the flow of carbon dioxide from the die (4).

7. An apparatus according to any one of the preceding claims, in which the retarder mechanism (13) comprises a blocking plate (14) which is arranged to close the outlet (12) of the or each carbon dioxide passage (5) in a first position, subsequently to be withdrawn to a second position a short distance from the outlet (12) to allow a length of solid carbon dioxide (16) to be extruded from the or each carbon dioxide passage (5) and subsequently to apply a torsional moment to break off the extruded solid carbon dioxide (16) adjacent to the outlet (12) of the or each carbon dioxide passage (5).

8. An apparatus according to any one of claims 1 to 6, in which the retarder mechanism (13) comprises a rotating plate adjacent to the die outlet (12) which is provided with a number of slots so that as the plate is rotated the outlet of the or each carbon dioxide passage (5) is periodically opened and closed allowing lengths of solid carbon dioxide to be extruded and subsequently broken off.

9. A method of producing solid carbon dioxide comprising the steps of:
providing a supply of refrigerant which is arranged to flow along a path (8) at least part of which is adjacent to a die (4) so that the refrigerant is in thermal contact with the die (4);
providing a supply of liquid carbon dioxide (7) to an inlet at one end of the die (4) and allowing the carbon dioxide to flow into the die (4);
characterised in that the solid carbon dioxide is extruded from an outlet (12) at the other end of the die (4) under the pressure exerted by liquid carbon dioxide (7) at the die inlet; and in that the rate of flow of liquid carbon dioxide and the rate at which solid carbon dioxide is extruded from the die outlet (12) is controlled so that the rate equals the rate at which liquid carbon dioxide within the die (4) solidifies, thereby maintaining a continuous flow of solid carbon dioxide through the outlet (12).

10. A method according to claim 9, in which the refrigerant is liquid nitrogen.

11. A method according to claim 10, further comprising the steps of heating the flow of liquid nitrogen after it has passed the die to vaporise all of the liquid nitrogen and subsequently dispensing gaseous nitrogen into pressure vessels.

## Patentansprüche

1. Vorrichtung zur Herstellung von festem Kohlendioxid, umfassend eine Form (4), die einen Einlaß und einen Auslaß (12) sowie Mittel (6) besitzt, die den Formeinlaß mit einer Zufuhr von flüssigem Kohlendioxid (7) unter Druck verbindet, wobei die Form (4) von Mitteln (8 bis 10) umgeben ist, die einen kontinuierlichen Kühlmittelstrom enthalten können, so daß in Gebrauch das Kühlmittel in thermischen Kontakt mit der Form (4) steht, um das flüssige Kohlendioxid so zu kühlen, daß es sich in der Form (4) verfestigt, dadurch gekennzeichnet, daß das feste Kohlendioxid aus dem Auslaß (12) als Ergebnis des Druckes des flüssigen CO₂ extrudiert wird, und daß die Vorrichtung ferner einen Verzögerungsmechanismus (13) zur Steuerung der Geschwindigkeit der Extrusion des festen Kohlendioxids und Mittel zur Steuerung der Extrusionsgeschwindigkeit des flüssigen Kohlendioxids umfasst, so daß die Geschwindigkeit, mit der das feste Kohlendioxid (16) kontinuierlich vom Kohlendioxidauslaß (12) extrudiert wird, der Geschwindigkeit gleicht, mit der sich das flüssige Kohelndioxid innerhalb des Kohlendioxiddurchgangs (5) verfestigt.

2. Vorrichtung nach Anspruch 1, bei der die Form (4) innerhalb eines Gehäuses (8) enthalten ist, das einen Kühlmitteleinlaß (9) und einen Kühlmittelauslaß (10) besitzt, so daß das Gehäuse mit dem Kühlmittel gefüllt werden kann, das kontinuierlich durch das Gehäuse (8) fließen kann.

3. Vorrichtung nach Anspruch 1 oder 2, bei dem die Form (4) eine Anzahl von Kohlendioxiddurchgängen (5) umfaßt, von denen jeder in das Kühlmittel eingetaucht ist, um den thermischen Kontakt und den Übergang der Wärmeenergie aus dem flüssigen Kohlendioxid zum Kühlungsmittel zu maximieren, während das Kohlendioxid entlang der Länge der Form (4) fließt.

4. Vorrichtung nach irgendeinem der vorstehenden Ansprüche, bei dem das Kühlungsmittel flüssiger Stickstoff ist.

5. Vorrichtung nach Anspruch 4, ferner umfassend ein Erwärmungsmittel (11), das den Stickstoffstrom erwärmt, nachdem er die Form (4) durchlaufen hat, um sicher zu stellen, daß sämtlicher Stickstoff in einem gasförmigen Zustand ist, und daß ein Auslaßventil den Stickstoff in die Druckbehälter abgeben kann.

6. Vorrichtung nach irgendeinem der Ansprüche 3 bis 5, bei der der Auslaß (12) von dem oder jeden Kohlendioxiddurchgang (5) mit Mitteln versehen ist, um den Ausgang zu schließen, um zu verhindern, das Kohlendioxid aus der Form (4) fließt.

7. Vorrichtung nach irgendeinem der vorstehenden Ansprüche, bei der der Verzögerungsmechanismus (13) eine Blockierungsplatte (14) umfaßt, die so angeordnet ist, daß sie den Auslaß (12) des oder jeden Kohlendioxiddurchgangs (5) in einer ersten Position schließt, anschließend zu einer zweiten Position in kurzer Entfernung vom Auslaß (12) weggezogen wird, damit eine Länge an festem Kohlendioxid (16) von dem oder jedem Kohlendioxiddurchgang (5) extrudiert und anschließend ein Torsionsmoment angelegt werden kann, um das extrudierte feste Kohlendioxid (16) angrenzend an Auslaß (12) des oder jedes Kohlendioxiddurchgangs (5) abzubrechen.

8. Vorrichtung nach irgendeinem der Ansprüche 1 bis 6, bei dem der Verzögerungsmechanismus (13) eine Drehplatte angrenzend an den Formauslaß (12) umfaßt, die mit einer Anzahl an Schlitzen versehen ist, so daß während sich die Platte dreht, der Ausgang des oder jedes Kohlendurchgangs (5) periodisch geöffnet und geschlossen wird, wodurch Längen an festem Kohlendioxid extrudiert und anschließend abgebrochen werden können.

9. Verfahren zum Herstellen festen Kohlendioxids, folgende Stufen umfassend:
Vorsehen einer Zufuhr an Kühlungsmittel, die derart ausgelegt ist, daß sie entlang eines Weges (8) fließt, von dem mindestens ein Teil an eine Form (4) angrenzt, so daß das Kühlungsmittel in thermischem Kontakt mit der Form (4) steht,
Vorsehen einer Zufuhr an flüssigen Kohlendioxid (7) zu einem Einlaß an einem Ende der Form (4) und Ermöglichen, daß das Kohlendioxid in die Form (4) hineinfließt,
dadurch gekennzeichnet, daß das feste Kohlendioxid aus einem Auslaß (12) am anderen Ende der Form (4) unter dem Druck extrudiert wird, der durch das flüssige Kohlendioxid (7) am Formeinlaß ausgeübt wird, und daß die Strömungsgeschwindigkeit des flüssigen Kohlendioxid und die Geschwindigkeit, mit der das feste Kohlendioxid aus dem Formauslaß (12) extrudiert wird, derart gesteuert wird, daß die Geschwindigkeit der Geschwindigkeit gleicht, mit der sich das flüssige Kohlendioxid innerhalb der Form (4) verfestigt, wodurch ein kontinuierlicher Strom an festem Kohlendioxid durch den Auslaß (12) aufrechterhalten wird.

10. Verfahren nach Anspruch 9, bei dem das Kühlmittel flüssiger Stickstoff ist.

11. Verfahren nach Anspruch 10, ferner umfassend die Stufen der Erwärmung des Stromes des flüssigen Stickstoffs, nachdem er die Form durchlaufen hat, um sämtlichen flüssigen Stickstoff zu verdampfen und anschließend das gasförmige Stickstoff in die Druckgefäße abzugeben.

## Revendications

1. Dispositif pour produire du dioxyde de carbone solide comprenant une filière (4) ayant une entrée et une sortie (12), des moyens (6) pour raccorder l'entrée de filière à une alimentation en dioxyde de carbone liquide (7) sous pression, dans lequel la filière (4) est entourée par des moyens (8 à 10) capables de contenir un écoulement continu de réfrigérant de façon que, lors de l'utilisation, le réfrigérant soit en contact thermique avec la filière (4) afin de refroidir le dioxyde de carbone liquide de sorte qu'il solidifie dans la filière (4) ; caractérisé en ce que le dioxyde de carbone solide est extrudé depuis la sortie (12) en résultat de la pression du dioxyde de carbone liquide et en ce que le dispositif comprend aussi un mécanisme retardateur (13) pour contrôler la vitesse d'extrusion de dioxyde de carbone solide et des moyens pour commander le débit d'écoulement de dioxyde de carbone liquide de telle sorte que la vitesse à laquelle le dioxyde de carbone solide (16) est extrudé en continu depuis la sortie de passage de dioxyde de carbone (12) soit égale à la vitesse à laquelle le dioxyde de carbone solidifie à l'intérieur du passage de dioxyde de carbone (5).

2. Dispositif selon la revendication 1, dans lequel la filière (4) est contenue à l'intérieur d'une enceinte (8) qui a une entrée de réfrigérant (9) et une sortie de réfrigérant (10) de façon que l'enceinte (8) puisse être remplie de réfrigérant, lequel peut s'écouler en continu à travers l'enceinte (8).

3. Dispositif selon la revendication 1 ou 2, dans lequel la filière (4) comprend un certain nombre de passages de dioxyde de carbone (5), chacun d'entre eux étant immergé dans du réfrigérant pour maximiser le contact thermique et transférer l'énergie thermique depuis le dioxyde de carbone liquide au réfrigérant quand le dioxyde de carbone s'écoule le long de la longueur de la filière (4).

4. Dispositif selon l'une quelconque des revendications précédentes, dans lequel le réfrigérant est de l'azote liquide.

5. Dispositif selon la revendication 4, comprenant en outre des moyens de chauffage (11) qui chauffent le flux d'azote après qu'il est passé dans la filière (4) pour assurer que tout l'azote est dans un état gazeux, et des moyens formant soupape de sortie capables de distribuer l'azote dans des récipients sous pression.

6. Dispositif selon l'une quelconque des revendications 3 à 5, dans lequel la sortie (12) du ou de chaque passage de dioxyde de carbone (5) est munie de moyens pour fermer la sortie afin d'empêcher l'écoulement de dioxyde de carbone depuis la filière (4).

7. Dispositif selon l'une quelconque des revendications précédentes, dans lequel le mécanisme retardateur (13) comprend une plaque de blocage (14) qui est agencée de façon à fermer la sortie (12) du ou de chaque passage de dioxyde de carbone (5) dans une première position, puis à être tirée vers une deuxième position à courte distance de la sortie (12) pour permettre à une longueur de dioxyde de carbone solide (16) d'être extrudée depuis le ou chaque passage de dioxyde de carbone (5), et ensuite à appliquer un moment de torsion pour rompre le dioxyde de carbone solide extrudé (16) au voisinage de la sortie (12) du ou de chaque passage de dioxyde de carbone (5).

8. Dispositif selon l'une quelconque des revendications 1 à 6, dans lequel le mécanisme retardateur (13) comprend une plaque rotative adjacente à la sortie de filière (12) qui est munie d'un certain nombre de fentes de façon que lorsque la plaque tourne, la sortie du ou de chaque passage de dioxyde de carbone (5) soit périodiquement ouverte et fermée, permettant à des longueurs de dioxyde de carbone solide d'être extrudées et ensuite rompues.

9. Procédé de production de dioxyde de carbone solide comprenant les étapes consistant à :
disposer une alimentation en réfrigérant qui est agencée de façon à s'écouler le long d'un trajet (8) dont au moins une partie est adjacente à une filière (4) de façon que le réfrigérant soit en contact thermique avec la filière (4) ;
disposer une alimentation en dioxyde de carbone liquide (7) à une entrée au niveau d'une extrémité de la filière (4) et laisser le dioxyde de carbone s'écouler dans la filière (4) ;
caractérisé en ce que le dioxyde de carbone solide est extrudé depuis une sortie (22) au niveau de l'autre extrémité de la filière (4) sous la pression exercée par le dioxyde de carbone liquide (7) au niveau de l'entrée de filière ; et en ce que le débit d'écoulement de dioxyde de carbone liquide et la vitesse à laquelle le dioxyde de carbone solide est extrudé depuis la sortie de filière (12) sont contrôlés de façon que la vitesse soit égale à la vitesse à laquelle le dioxyde de carbone liquide solidifie à l'intérieur de la filière (4), de façon à maintenir un écoulement continu de dioxyde de carbone solide à travers la sortie (12).

10. Procédé selon la revendication 9, dans lequel le réfrigérant est de l'azote liquide.

11. Procédé selon la revendication 10, comprenant en outre les étapes consistant à chauffer le flux d'azote après qu'il a traversé la filière pour évaporer tout l'azote et ensuite à distribuer l'azote dans des récipients sous pression.
